# EUROPEAN PATENT SPECIFICATION

(11) **EP 2 488 749 B1**
(45) Date of publication and mention of the grant of the patent: **08.06.2016**
(21) Application number: 09764604.6
(22) Date of filing: 13.10.2009
(51) Int. Cl.: F03D 3/06, F03B 17/06

(54) **ENERGY CONVERSION ASSEMBLY**
ENERGIEWANDLUNGSEINHEIT
ENSEMBLE DE CONVERSION D'ENERGIE

(43) Date of publication of application: 22.08.2012
(73) Proprietor: Bolelli, Roberto, 40020 Casalfiumanese (IT)
(72) Inventor: Bolelli, Roberto, 40020 Casalfiumanese (IT)
(74) Representative: Modiano, Micaela Nadia
(86) International application number: PCT/IT2009/000464
(87) International publication number: WO 2011/045820

(56) References cited:
- EP-A1- 2 034 179
- EP-A2- 2 146 091
- EP-A2- 2 146 092
- WO-A1-2004/092578
- WO-A1-2005/085633
- DE-A1-102007 017 942
- DE-C- 604 333
- FR-A1- 2 926 611
- GB-A- 244 414
- JP-A- 2006 283 713
- US-A- 1 463 924
- US-A- 3 918 839
- US-A- 4 177 014

## Description

### Technical field

The present invention relates to an energy conversion assembly, particularly for wind power.

### Background art

Currently, more and more attention is being given to the exploitation of alternative and/or renewable energies, in order to ensure that energy demand is met without resorting to the utilization of fossil fuels (oil, coal, etcetera), which are destined to depletion and in any case are highly pollutant.

Among these alternative energies, an unquestionably important role is played by wind power, which is obtained, as is known, from the conversion of the kinetic energy of wind into other forms (typically electric power).

Wind-power generators are therefore increasingly widespread which are located at areas that have sufficient wind and which consist of one or more masts which support, at their top, respective wind turbines, which are entrusted with the task of converting wind power into mechanical energy, which in turn is capable of powering respective electric generators, for example alternators, for the desired generation of electric power.

In order to ensure maximum efficiency in conversion and maximize the mechanical energy value for an equal energy supplied by the air flow that strikes the turbine, particular attention is therefore given to the shape of the wind-power blades that belong to the rotor of the turbine.

More precisely, good dimensioning of the blades and the choice of profiles capable of conveying the flow appropriately make it possible to contain the losses that are inevitably associated with the conversion process and to ensure high performance of the turbine.

WO 2005/085633 A1 discloses a wind power engine comprising a rotor with a vertical rotational axis, a pair of end blade bodies and a central deflection body connected by parallel end plates.

DE 10 2007 017942 discloses a turbine wing arrangement rotatable around a vertical axis including a set of three wings including a central wing and a pair of end wings.

### Disclosure of the invention

The aim of the present invention is to provide an assembly capable of ensuring high efficiency in energy conversion.

Within this aim, an object of the invention is to provide an assembly whose acoustic impact is nil or at the most extremely low.

Another object of the invention is to provide an assembly that ensures high reliability in operation.

Another object of the invention is to provide an assembly that can be obtained easily starting from commonly commercially available elements and materials, which may even be valuable and/or recyclable.

Another object of the invention is to provide an assembly that has low costs and is safe in application.

In accordance with the invention, there is provided an energy conversion assembly as defined in the appended claims.

### Brief description of the drawings

Further characteristics and advantages of the invention will become better apparent from the following detailed description of three preferred but not exclusive embodiments of the assembly according to the invention, illustrated by way of non-limiting example in the accompanying drawings, wherein:

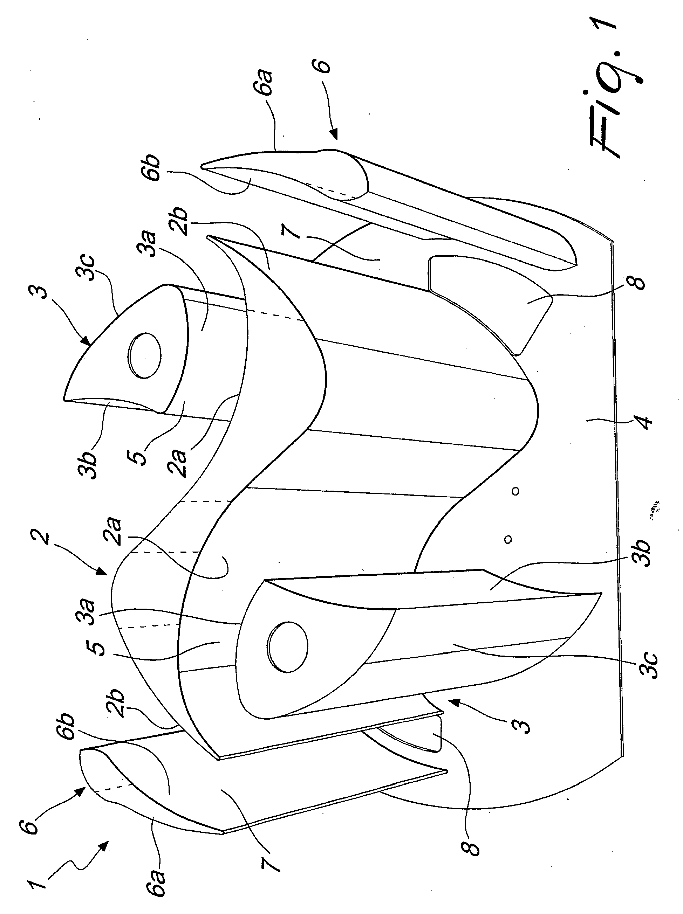

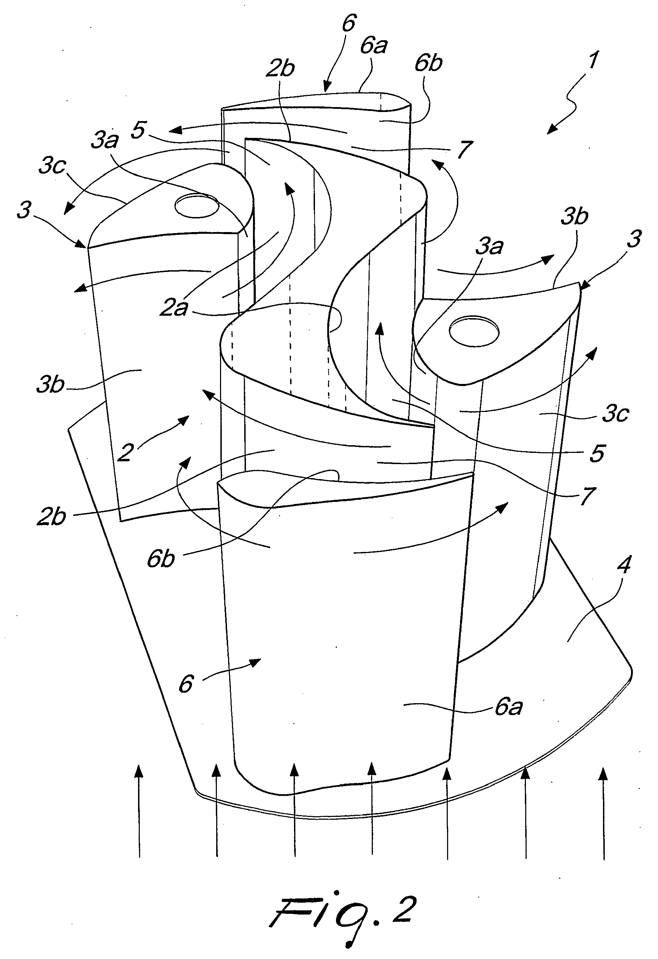

Figures 1 and 2 are views of an assembly according to the invention in the first embodiment, more precisely:
   Figure 1 is a perspective view of the assembly according to the invention in a first angular position;
   Figure 2 is a perspective view of the assembly according to the invention in a second angular position and illustrates the direction of the flows of fluid current;
   Figures 3 and 4 are views of the assembly according to the invention in a second embodiment, and in particular:

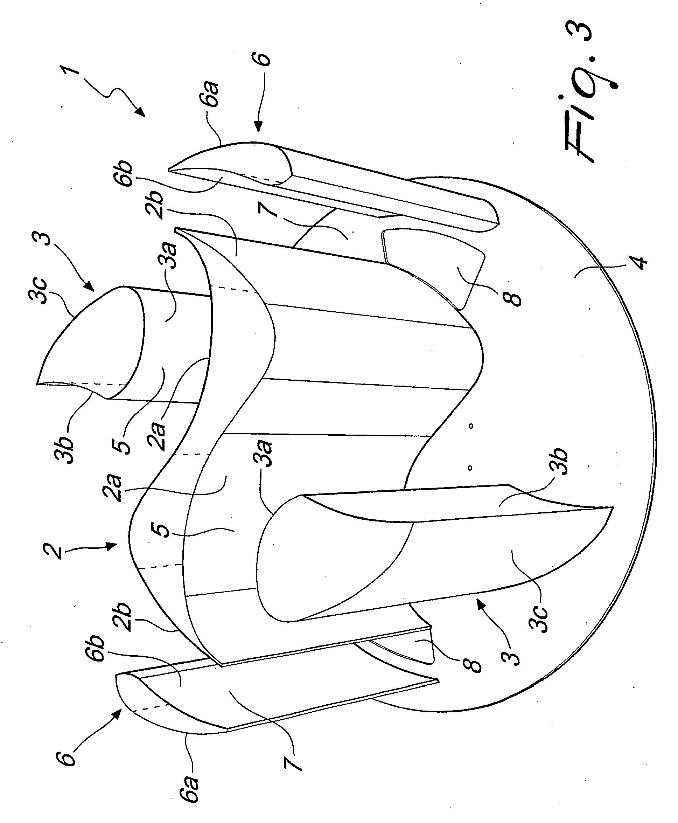

Figure 3 is a perspective view of the assembly according to the invention in a first angular position;

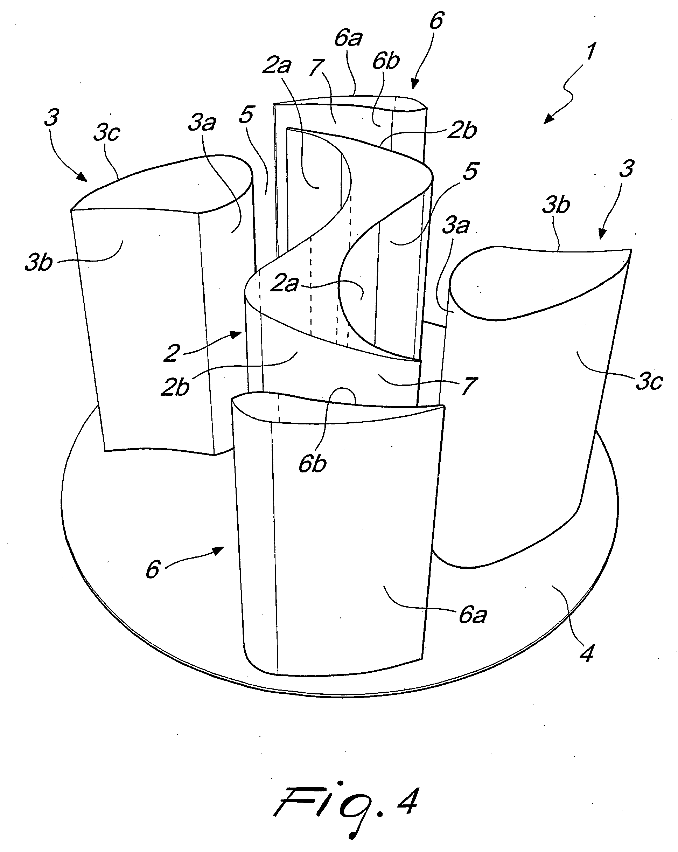

Figure 4 is a perspective view of the assembly according to the invention in a second angular position;

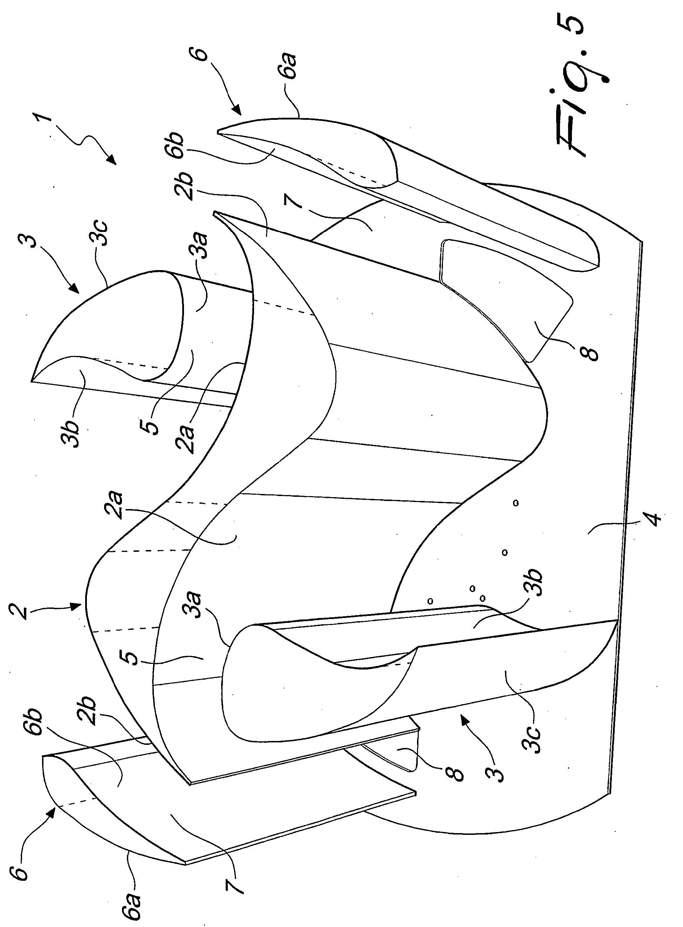

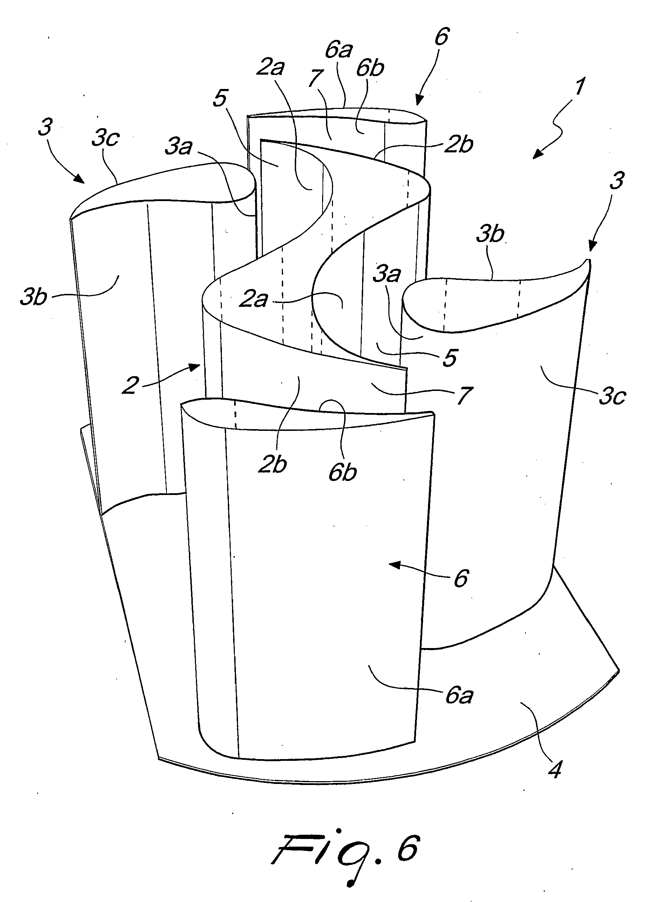

Figures 5 and 6 are views of the assembly according to the invention in a third embodiment, and in particular:
   Figure 5 is a perspective view of the assembly according to the invention in a first angular position;
   Figure 6 is a perspective view of the assembly according to the invention in a second angular position.

### Ways of carrying out the invention

With reference to the figures, an assembly according to the invention, generally designated by the reference numeral 1, is suitable for energy conversion and comprises at least one central blade 2 with a preferably S-shaped transverse cross-section. The blade 2 can rotate about a central axis, which is parallel to its generatrices, by means of a fluid current, with consequent transmission of mechanical energy to a shaft which can be associated with the blade 2.

It should be specified immediately that according to the preferred application of the invention the assembly 1 is part of a wind-power generator and is therefore capable of converting the kinetic energy of wind (which therefore constitutes the fluid current) into mechanical energy in order to make it available (due to the rotation of the shaft) to an electric power generator, such as a dynamo or an alternator.

Reference shall be made in the rest of the present description to this preferred application, but different uses (which are in any case within the protective scope claimed herein) of the assembly 1 according to the invention are not excluded if the specific requirements allow it and/or make it preferable.

In the following, the direction and orientation indicated in Figure 2 will be considered for the wind; of course, the choice is entirely arbitrary and is used merely by way of example; any other direction does not compromise the operation of the assembly 1 according to the invention.

It is further suitable to specify that the configuration and curvature chosen for the profiles of the active elements of the assembly 1 are such as to cause a clockwise rotation of the assembly 1 (in this regard, too, several references shall be made in the course of the description). However, the possibility is not excluded of providing assemblies 1 in which the profiles are adapted to impart a counterclockwise rotation or simply to achieve this result by means of a different assembly of the same elements shown in the accompanying drawings. Moreover, the possibility is provided of using two or more assemblies 1, for example to adopt a solution that comprises two turbines (each of which has a respective assembly 1) which are mated horizontally for increasing the transmitted power.

According to the invention, the assembly 1 comprises at least one pair 3 of substantially wedge-shaped bodies which are jointly connected to the blade 2 and face it on opposite sides.

Each one of the three lateral faces 3a, 3b, 3c of each one of the substantially wedge-shaped bodies 3 is affected by the action of the fluid current for respective useful sectors of rotation (which can at least partially coincide) and produces, substantially in each one of such sectors, an active contribution to the motor moment that is transmitted by the fluid current to the blade 2 for optimizing the value of transmitted mechanical energy.

More particularly, the blade 2 is of the type with a vertical axis, in which the central axis therefore is substantially perpendicular to the ground.

Conveniently, the assembly 1 comprises a lower plate 4, which ensures support and coupling for the central blade 2 and for the substantially wedge-shaped bodies 3. Further, the assembly 1 comprises an upper plate, which is arranged in a substantially parallel configuration with respect to the lower plate 4 and rests in an upper region stably against the central blade 2 and the bodies 3.

The shaft designed to receive the motor moment to be transmitted to the electric generator can be associated with the lower plate 4 (and/or optionally with the upper plate); further, other additional elements of the assembly 1, such as for example control and adjustment devices of various kinds, can be anchored to the lower plate 4 (and/or to the upper plate).

Moreover, the lower plate 4 and the upper plate help to avoid that even part of the fluid current escapes upward or downward with respect to the blade 2 and the bodies 3, thus maximizing their efficiency without the possibility of losing part of the useful effect.

According to an embodiment of substantial practical interest, which is cited and presented in the accompanying figures by way of non-limiting example of the application of the invention, each substantially wedge-shaped body 3 comprises a first lateral face 3 a which is substantially convex and faces a respective curve 2a of the central blade 2. Each one of the first lateral faces 3a cooperates to form, with the respective curve 2a (which is concave) and corresponding portions of the lower plate 4 and of the upper plate, a first channel 5 for the fluid current.

The first channel 5 tapers progressively on the opposite side with respect to the incoming direction of the fluid current: at the useful sectors of the first lateral face 3 a, the angular orientation of the assembly 1 is such that the fluid current enters the first channel 5 and produces, substantially by Venturi effect, the active contribution to the motor moment transmitted to the blade 2, applying a force to the walls of the first channel 5 (and therefore to the first lateral face 3a and especially to the curve 2a).

With reference to the preferred embodiment, each substantially wedge-shaped body 3 further comprises a second substantially concave lateral face 3b; it is indeed at some of the sectors that are useful for the second lateral face 3b that the inclination of said second face is such as to be affected by the action of the fluid current that is conveyed toward the first channel 5, with the effects described above.

Moreover, as a consequence of a partial rotation of the assembly 1, the second lateral face 3b is arranged at additional useful sectors, in which the fluid current directly provides an active contribution to the motor moment transmitted to the blade 2, since the force that it applies has a component that imparts a rotation to the body 3 which has a clockwise orientation.

With further reference to the preferred embodiment shown in the accompanying figures, each substantially wedge-shaped body 3 finally comprises a third lateral face 3c which is substantially convex: at the sectors that are useful for the third lateral face 3c, such face is struck by the fluid current so as to provide again an active contribution to the motor moment transmitted to the blade 2.

Advantageously, the assembly 1 comprises at least one pair of tangential vanes 6, which are preferably shaped with a cross-section of the type of a wing section and are interposed, like the blade 2 and the bodies 3, between the lower plate 4 and the upper plate (to which they are further coupled). The tangential vanes 6 are arranged alternately with respect to the bodies 3 and face the ends 2b of the central blade 2: at respective active sectors of rotation of the assembly 1, the vanes 6 constitute a protective screen for the blade 2 with respect to the fluid current, preventing the onset of drag which might otherwise reduce the efficiency of conversion of the kinetic energy of the wind.

In particular, it is at the angular configuration of Figure 2, in which the direction of the wind is substantially aligned longitudinally with the S-shaped profile of the blade 2, that the vanes 6 perform the role of protection against the fluid current cited above.

Moreover, due to the curvature of the outer face 6a of the vane 6, the resultant of the thrust of the fluid current is equally orientated with respect to the rotation of the blade 2 and therefore also contributes to maximization of the transmitted mechanical energy.

Conveniently, the internal face 6b of the vane 6 that is directed toward the blade 2 has a shape that is adapted to produce, at additional active sectors of the rotation, a lift effect which is equally orientated (i. e. such as to impart a clockwise rotation) with respect to the rotation of the blade 2 for maximization of the transmitted mechanical energy.

It should also be noted that the internal faces 6b of the vanes 6, the respective end 2b of the blade 2 and the corresponding regions of the lower plate 4 and of the upper plate form a second channel 7 for the fluid current.

In order to allow the evacuation of the mass of air that in certain angular positions can pass through the second channel 7, producing by means of the Venturi effect a drag that contrasts the rotation of the blade 2, the lower plate 4 and the upper plate comprise, at the above cited regions that delimit the second channels 7, suitable vents 8 for the fluid current (which can have various configurations depending on specific requirements).

The operation of the assembly according to the invention is as follows.

Under the effect of the wind that strikes the blade 2, the bodies 3 and the vanes 6, the assembly 1 according to the invention rotates about its own central axis, transmitting mechanical energy (torque motor moment) to a shaft, which as mentioned can be for example anchored, together with any other components such as control devices, to the lower plate 4 (on the side opposite to the blade 2).

Each component of the assembly 1 (the blade 2, the bodies 3 and in particular each one of their lateral faces 3a, 3b, 3c, as well as the vanes 6) is, in respective useful sectors, affected by the action of the fluid current and some of these useful sectors coincide: the force imparted by the wind is thus adapted to increase the transmitted mechanical energy, thus providing the desired maximization of conversion efficiency.

For the third lateral face 3c, the useful sectors of rotation are mainly the ones in which the respective body 3 lies to the right of the rotation axis: the fluid current can in fact strike the third lateral face 3c with a resultant that is directed, due to its curvature, so as to impart a clockwise motion to the assembly 1.

In some configurations, such as for example the one of Figure 2 (and therefore also Figures 4 and 6), while the third lateral face 3c of the body 3 arranged to the right of the rotation axis acts, the second lateral face 3b of the body 3 arranged to the left of the rotation axis and the tangential vane 6 that is exposed to the fluid current (downward in the figure) also contribute positively to the motor moment that is transmitted.

A further clockwise rotation makes the fluid current affect the other tangential vane 6: in greater detail, the vane 6, in this step, contributes to increase the torque that is transmitted by means of the lift effect illustrated in the preceding paragraphs.

With the clockwise rotation, the body 3 arranged to the right of the rotation axis moves to the left thereof: initially, this causes it to expose to the current the third lateral face 3c (which provides a positive contribution). Then a further rotation of the assembly 1 causes progressively the hiding of the third lateral face 3c, while the second lateral surface 3b is exposed to the action of the fluid current: initially, both the third lateral face 3c and the second lateral face are affected by the action of the wind, which conveys the fluid current toward the first channel 5, as described above.

Subsequently, the rotation of the assembly 1 leads to an increasing exposure of the second lateral face 3b to the wind, while on the other hand the third lateral face 3c is less and less affected by the fluid current.

During this step, the curvature of the second lateral face 3b is such as to produce a resultant for the action of the fluid current that contributes positively to the transmitted motor moment.

It should also be noted that the assembly 1 according to the invention can be made effectively of materials of various kinds, including for example valuable and/or recyclable materials, if the specific requirements of application or aesthetic preferences make this preferable.

Moreover, it is specified that the assembly 1 according to the invention can be used for applications in which a speed reduction unit is provided between the blade 2 and the alternator (or dynamo), as well as for applications in which there is no speed reduction unit (with consequent advantages in terms of structural simplicity and reduction of frictions and of dissipation effects).

Finally, it is convenient to note that the assembly 1 according to the invention allows the high conversion efficiencies described above with a solution whose acoustic impact is extremely low or even nil (verified also by tests conducted with a rotation rate up to 250 rpm, which indicate that in such conditions the noise generated is nil) and considerably lower than known solutions.

In practice it has been found that the assembly according to the invention fully achieves the intended aim, since it ensures high efficiency of energy conversion by means of at least one pair of wedge-shaped bodies that face the blade and are capable of contributing actively to the motor moment that is transmitted with each one of their three lateral faces.

The invention thus conceived is susceptible of numerous modifications and variations, all of which are within the scope of the appended claims.

For example, the possibility is provided of adopting bodies 3 and/or vanes 6 which can be oriented with respect to the lower plate 4 (and therefore with respect to the central blade 2), in order to optimize the conversion efficiency of the kinetic energy of the wind as a function of the intensity thereof and/or the specific constructive requirements.

Moreover, the possibility of automating the above cited orientations is not excluded.

It is further noted that the protective scope claimed herein includes assemblies 1 that have, for the various elements, different profiles and/or shapes (but substantially the same operating principle already described) with respect to the preferred embodiment shown in Figures 1 and 2.

In particular, Figures 3 and 4 illustrate an embodiment that uses a lower plate 4, which has a substantially circular shape and elongated bodies 3, to follow more uniformly the curves 2a of the blade 2. The assembly 1 thus obtained is particularly suitable for conditions of low wind speed, due to a configuration that is capable of transmitting a larger motor moment and can therefore utilize at best even minimal energy carried by the fluid current.

Figures 5 and 6 instead illustrate an embodiment that adopts bodies 3 which have a shape substantially like a hooked beak: in this manner, the edge comprised between the second lateral face 3b and the third lateral face 3 c assumes the shape of a hook, which better conveys, in certain useful sectors of rotation, the fluid current toward the first channel 5.

In the exemplary embodiments shown, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

In practice, the materials used, as well as the dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An energy conversion assembly (1), comprising:
at least one central blade (2) with an S-shaped transverse cross-section wherein said blade (2) has a pair of convex ends (2b) and a pair of concave curves (2a) arranged at opposite sides of the blade (2), said blade (2) being able to rotate about a central axis which is parallel to its generatrices by means of the action of a fluid current, with consequent transmission of mechanical energy to a shaft associated with said blade (2), **characterised by**
at least one pair of wedge-shaped bodies (3) which are jointly connected to said blade (2) and face said blade (2) on said opposite sides thereof,
said wedge-shaped bodies (3) being jointly connected to said blade (2) by means of a lower plate (4) for supporting and coupling said blade (2) and said wedge-shaped bodies (3), and further by means of an upper plate, which is substantially parallel to said lower plate (4), positioned above said blade (2) and said bodies (3) and stably supported by them,
each one of said wedge-shaped bodies (3) comprising a first lateral face (3a) which is convex and faces a respective said concave curve (2a) of said central blade (2), each one of said first lateral faces (3a), the respective curve (2a), a corresponding portion of said lower plate (4) and of said upper plate forming a first channel (5) for the fluid current, which channel tapers on the side opposite to the incoming direction of said fluid current, at said sectors useful for said first lateral face (3 a) the fluid current entering said first channel (5) so as to produce the active contribution to the motor moment transmitted to said blade (2),
each one of said wedge-shaped bodies (3) further comprising a second concave lateral face (3b) extending from said first lateral face (3a) in a direction away from said concave curve (2a) of said blade, at some of said useful sectors for said second lateral face (3b) the fluid current being conveyed toward said first channel (5), at other of said useful sectors the fluid current providing an active contribution to the motor moment transmitted to said blade (2),
each one of said wedge-shaped bodies (3) further comprising a third lateral face (3c) which is convex and which interconnects said first and second lateral faces (3a,3b), at said sectors that are useful for said third lateral face (3c) the fluid current providing an active contribution to the motor moment transmitted to said blade (2), further **characterised by**
at least one pair of tangential vanes (6), which are interposed between and coupled to said lower plate (4) and said upper plate, and which are arranged in alternation to said bodies (3) and face the convex ends (2b) of said central blade (2), at respective active sectors of rotation said vanes (6) constituting a protective screen for said blade (2) with respect to the fluid current and defining a resultant of the thrust of the fluid current that is equally orientated with respect to the rotation of said blade (2) for maximizing the transmitted mechanical energy,
wherein each one of the three lateral faces (3a, 3b, 3c) of each one of said wedge-shaped bodies (3) being affected by the action of the fluid current for respective useful sectors of rotation and providing, in each one of said sectors, an active contribution to the motor moment transmitted by the fluid current to said blade (2), in order to optimize the value of the transmitted mechanical energy.

2. The assembly according to claim 1, **characterized in that** said blade (2) is of the type with a vertical axis, said central axis being perpendicular to the ground.

3. The assembly according to one or more of the preceding claims, **characterized in that** a second channel (7) for the fluid current is formed by each one of the internal faces (6b) of said vanes (6), the respective convex end (2b) of said blade (2), and a corresponding region of said lower plate (4) and of said upper plate, said lower plate (4) and said upper plate comprising, at said regions that delimit said second channels (7), vents (8) for the fluid current.

## Patentansprüche

1. Eine Energiewandeleinheit (1), die Folgendes umfasst:
mindestens eine zentrale Klinge (2) mit einem S-förmigen transversalen Querschnitt, wobei die Klinge (2) ein Paar konvexer Enden (2b) und ein Paar konkaver Kurven (2a) hat, die an gegenüberliegenden Seiten der Klinge (2) angeordnet sind, wobei die Klinge (2) durch die Wirkung eines Fluidstroms in der Lage ist, sich um eine zentrale Achse zu drehen, die parallel zu ihren Erzeugenden ist, mit daraus folgender Übertragung mechanischer Energie auf eine Welle, die mit der Klinge (2) verbunden ist, **gekennzeichnet durch**
mindestens ein Paar keilförmiger Körper (3), die fest mit der Klinge (2) verbunden sind und der Klinge (2) auf den gegenüberliegenden Seiten derselben zugewandt sind,
wobei die keilförmigen Körper (3) mit der Klinge (2) fest über eine untere Platte (4) zum Tragen und Koppeln der Klinge (2) und der keilförmigen Körper (3) verbunden sind, und weiter über eine obere Platte, die im Wesentlichen parallel zu der unteren Platte (4) ist, positioniert oberhalb der Klinge (2) und der Körper (3) und stabil von ihnen getragen,
wobei jeder der keilförmigen Körper (3) eine erste Seitenfläche (3a) umfasst, die konvex ist und der entsprechenden konkaven Kurve (2a) der zentralen Klinge (2) zugewandt ist, wobei jede der ersten Seitenflächen (3a), die entsprechende Kurve (2a), ein entsprechender Abschnitt der unteren Platte (4) und der oberen Platte einen ersten Kanal (5) für den Fluidstrom bilden, wobei der Kanal an der Seite, die der Eingangsrichtung des Fluidstroms gegenüberliegt, spitz zuläuft, wobei der Fluidstrom an den Abschnitten, die für die erste Seitenfläche (3a) nützlich sind, in den ersten Kanal (5) eintritt, um den aktiven Beitrag zu dem Motordrehmoment zu leisten, das auf die Klinge (2) übertragen wird,
wobei jeder der keilförmigen Körper (3) weiter eine zweite konkave Seitenfläche (3b) umfasst, die sich von der ersten Seitenfläche (3a) in eine Richtung fort von der konkaven Kurve (2a) der Klinge erstreckt, wobei an einigen der nützlichen Abschnitte für die zweite Seitenfläche (3b) der Fluidstrom zu dem ersten Kanal (5) hin befördert wird, und der Fluidstrom an anderen der nützlichen Abschnitte einen aktiven Beitrag zu dem Motordrehmoment leistet, das auf die Klinge (2) übertragen wird,
wobei jeder der keilförmigen Körper (3) weiter eine dritte Seitenfläche (3c) umfasst, die konvex ist und die die ersten und zweiten Seitenflächen (3a, 3b) miteinander verbindet, wobei an den Abschnitten, die für die dritte Seitenfläche (3c) nützlich sind, der Fluidstrom einen aktiven Beitrag zu dem Motordrehmoment leistet, das auf die Klinge (2) übertragen wird, weiter **gekennzeichnet durch**
mindestens ein Paar tangentialer Schaufeln (6), die zwischen der unteren Platte (4) und der oberen Platte angeordnet und mit ihnen gekoppelt sind, und die alternierend mit den Körpern (3) angeordnet und den konvexen Enden (2b) der zentralen Klinge (2) zugewandt sind, wobei die Schaufeln (6) an entsprechenden aktiven Rotationsabschnitten einen Schutzschild für die Klinge (2) mit Bezug auf den Fluidstrom bilden und eine Resultierende des Schubs des Fluidstroms bestimmen, die mit Bezug auf die Rotation der Klinge (2) gleich ausgerichtet ist, um die übertragene mechanische Energie zu maximieren,
wobei jede der drei Seitenflächen (3a, 3b, 3c) jedes der keilförmigen Körper (3) von der Wirkung des Fluidstroms für entsprechende nützliche Rotationsabschnitte beeinflusst wird und in jedem der Abschnitte einen aktiven Beitrag zu dem Motordrehmoment leistet, das vom Fluidstrom auf die Klinge (2) übertragen wird, um den Wert der übertragenen mechanischen Energie zu optimieren.

2. Die Einheit gemäß Anspruch 1, **dadurch gekennzeichnet, dass** die Klinge (2) vom Typ mit einer vertikalen Achse ist, wobei die zentrale Achse senkrecht zum Boden ist.

3. Die Einheit gemäß einem oder mehreren der obigen Ansprüche, **dadurch gekennzeichnet, dass** ein zweiter Kanal (7) für den Fluidstrom von jeder der Innenflächen (6b) der Schaufeln (6), dem entsprechenden konvexen Ende (2b) der Klinge (2) und einem entsprechenden Bereich der unteren Platte (4) und der oberen Platte gebildet wird, wobei die untere Platte (4) und die obere Platte in den Bereichen, die die zweiten Kanäle (7) begrenzen, Ablässe (8) für den Fluidstrom umfassen.

## Revendications

1. Ensemble de conversion d'énergie (1) comportant :
au moins une hélice centrale (2) à section transversale en forme de S, ladite hélice (2) ayant une paire d'extrémités convexes (2b) et une paire de courbures concaves (2a) ménagées sur des côtés opposés de l'hélice (2), ladite hélice (2) pouvant tourner autour d'un axe central parallèle à ses génératrices sous l'action d'un courant de fluide, avec transmission conséquente d'énergie mécanique à un arbre associé à ladite hélice (2), **caractérisé par**
au moins une paire de corps cunéiformes (3) qui sont montés conjointement sur ladite hélice (2) et sont en regard de ladite hélice (2) sur lesdits côtés opposés de celle-ci,
lesdits corps cunéiformes (3) étant montés conjointement sur ladite hélice (2) à l'aide d'une plaque inférieure (4) pour supporter et relier ladite hélice (2) et lesdits corps cunéiformes (3), et également à l'aide d'une plaque supérieure, laquelle est sensiblement parallèle à ladite plaque inférieure (4), placée au-dessus de ladite hélice (2) et desdits corps (3) et supportée d'une manière stable par ceux-ci,
chacun desdits corps cunéiformes (3) comprenant une première face latérale (3a) qui est convexe et est située en regard d'une dite courbure concave respective (2a) de ladite hélice centrale (2), chacune desdites premières faces latérales (3a), la courbure respective (2a), une partie correspondante de ladite plaque inférieure (4) et de ladite plaque supérieure formant un premier canal (5) pour le courant de fluide, lequel canal se resserre sur le côté opposé à la direction d'arrivée dudit courant de fluide, le courant de fluide, dans lesdits secteurs utiles pour ladite première face latérale, entrant dans ledit premier canal (5) afin de produire la contribution active au moment de moteur transmis à ladite hélice (2),
chacun desdits corps cunéiformes (3) comprenant en outre une deuxième face latérale concave (3b) s'étendant depuis ladite première face latérale (3a) dans une direction qui s'écarte de ladite courbure concave (2a) de ladite hélice, le courant de fluide, dans certains desdits secteurs utiles pour ladite deuxième face latérale (3b), étant acheminé vers ledit premier canal (5), le courant de fluide, dans d'autres desdits secteurs utiles, apportant une contribution active au moment de moteur transmis à ladite hélice (2),
chacun desdits corps cunéiformes (3) comprenant en outre une troisième face latérale (3c) qui est convexe et qui relie l'une à l'autre lesdites première et deuxième faces latérales (3a, 3b), le courant de fluide, dans lesdits secteurs utiles pour ladite troisième face latérale (3c), apportant une contribution active au moment de moteur transmis à ladite hélice (2), **caractérisé en outre par**
au moins une paire de pales tangentielles (6), qui sont intercalées entre et couplées à ladite plaque inférieure (4) et ladite plaque supérieure, et qui sont installées en alternance avec lesdits corps (3) et sont en regard des extrémités convexes (2b) de ladite hélice centrale (2), lesdites pales (6), dans des secteurs de rotation actifs respectifs, constituant un écran protecteur pour ladite hélice (2) par rapport au courant de fluide et définissant une résultante de la poussée du courant de fluide qui est orientée d'une manière égale par rapport à la rotation de ladite hélice (2) pour maximiser l'énergie mécanique transmise,
chacune des trois faces latérales (3a, 3b, 3c) de chacun desdits corps cunéiformes (3) subissant l'action du courant de fluide pour des secteurs de rotation utiles respectifs et apportant, dans chacun desdits secteurs, une contribution active au moment de moteur transmis à ladite hélice (2) par le courant de fluide, afin d'optimiser la valeur de l'énergie mécanique transmise.

2. Ensemble selon la revendication 1, **caractérisé en ce que** ladite hélice (2) est du type à axe vertical, ledit axe central étant perpendiculaire au sol.

3. Ensemble selon l'une ou plusieurs des revendications précédentes, **caractérisé en ce qu'**un second canal (7) pour le courant de fluide est formé par chacune des faces internes (6b) desdites pales (6), l'extrémité convexe respective (2b) de ladite pale (2) et une zone correspondante de ladite plaque inférieure (4) et de ladite plaque supérieure, ladite plaque inférieure (4) et ladite plaque supérieure comprenant, dans lesdites zones qui délimitent lesdits seconds canaux (7), des orifices (8) pour le courant de fluide.
